# EUROPEAN PATENT SPECIFICATION

(11) **EP 2 384 072 B1**
(45) Date of publication and mention of the grant of the patent: **16.09.2020**
(21) Application number: 10735646.1
(22) Date of filing: 28.01.2010
(51) Int. Cl.: H04W 72/04, H04W 88/08

(54) **BASE STATION APPARATUS AND TRANSMISSION METHOD**
BASISSTATIONSGERÄT UND ÜBERTRAGUNGSVERFAHREN DAFÜR
APPAREIL DE STATION DE BASE ET PROCÉDÉ D'ÉMISSION

(30) Priority: 29.01.2009 JP 2009017893
(43) Date of publication of application: 02.11.2011
(73) Proprietor: Sun Patent Trust, New York, NY 10017 (US)
(72) Inventor: HORIUCHI, Ayako, Osaka-shi, Osaka 540-6207 (JP); NAKAO, Seigo, Osaka-shi, Osaka 540-6207 (JP); YUDA, Yasuaki, Osaka-shi, Osaka 540-6207 (JP); IMAMURA, Daichi, Osaka-shi, Osaka 540-6207 (JP); NISHIO, Akihiko, Osaka-shi, Osaka 540-6207 (JP)
(74) Representative: Grünecker Patent- und Rechtsanwälte PartG mbB
(86) International application number: PCT/JP2010/000497
(87) International publication number: WO 2010/087174

(56) References cited:
- EP-A1- 2 393 252
- US-A1- 2008 175 215
- LG ELECTRONICS: "Consideration on Resource Allocation for Relay Backhaul Link", 3GPP DRAFT; R1-090222, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Ljubljana; 20090108, 8 January 2009 (2009-01-08), XP050318152, [retrieved on 2009-01-08]
- '3GPP TSG-RAN1 Meeting #55, R1-084460, [online], 3rd Generation Partnership Project, 2008.11.14', article NORTEL: 'Supporting relay for Rel-8 UE in downlink', XP050317714
- '3GPP TSG RAN WG1 Meeting #55, R1-084232, [online], 3rd Generation Partnership Project, 2008.11.14', article PANASONIC: 'Discussion on the TD relay and FD relay for FDD system', XP050317518
- ERICSSON: 'Efficient support of relays through MBSFN subframes' TSG-RAN WG1 #55, RL-084357, [Online] 14 November 2008, XP050317627 Retrieved from the Internet: <URL:http://www.3gpp.org/ftp/tsg_ran /WG1_RL1/TSGR1_55/Docs/R1-084357.zip> [retrieved on 2010-02-22]
- "Agenda Item 12.6 Source: Nortel Networks Document For: Discussion and Decision", 3GPP DRAFT; R1-090153(NORTEL-CTRL AND DATA CHANNEL DESIGN FOR RELAY LINK), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Ljubljana, Slovenia; 20090112 - 20090116, 8 January 2009 (2009-01-08), XP050597200, [retrieved on 2009-01-08]

## Description

### Technical Field

The present invention relates to a base station apparatus and a transmission method for transmitting a control signal to a relay station apparatus in time-division relay.

### Background Art

In recent years, most of cellular mobile communication systems such as cellular phones allow not only transmission of voice data but also large-volume data transmission such as still picture images and motion picture images, along with development of information into multimedia. In order to achieve large-volume data transmission, techniques are actively researched to achieve high transmission rates using high frequency radio band.

When a high-frequency radio band is used, a high transmission rate can be expected in a short distance, but attenuation increases in a long distance as the distance increases. Thus, when a mobile communication system using a high frequency radio band is actually operated, the coverage area of a radio communication base station apparatus (hereinafter abbreviated as base station) is reduced, and therefore, it is necessary to install more base stations. However, installation of a base station requires a correspondingly high cost. Therefo re, there is a strong demand for a technique achieving communication service using a high frequency radio band that can increase the coverage area while suppressing increase in the number of base stations.

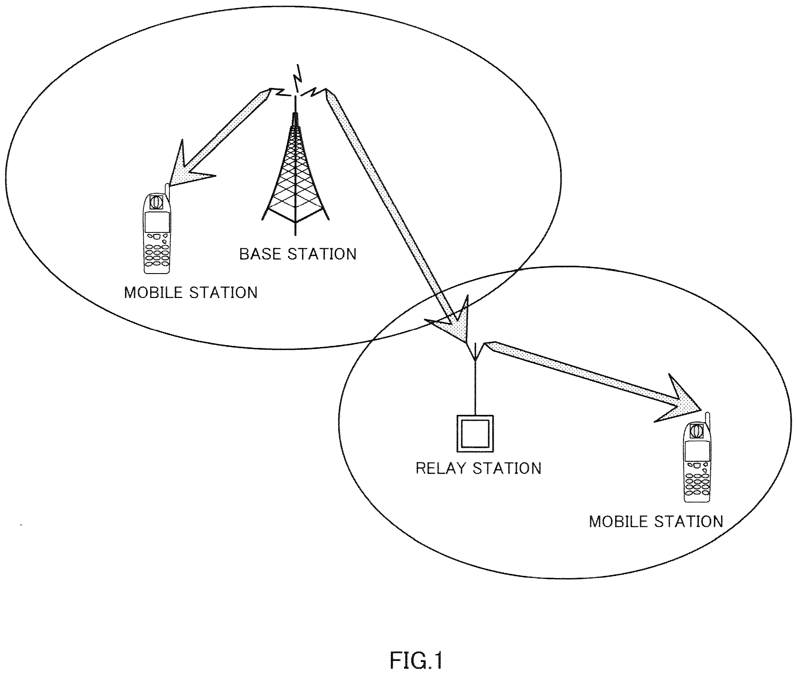

In order to satisfy such demand, a relaying technique is researched. In this relaying technique, a radio communication relay station apparatus (hereinafter abbreviated as relay station) is installed (see FIG.1) between a base station and a radio communication mobile station apparatus (hereinafter abbreviated as mobile station), and the base station and the mobile station communicate with each other via the relay station. When the relaying technique is used, the mobile station can communicate with the base station via the relay station even if the mobile station is located away from the base station and is difficult to directly communicate with the base station.

As the relaying technique, there are methods using frequency-division relay (FD relay, FDD relay) or time-division relay (TD relay, TDD relay). Frequency-division relay will be explained using a downlink, for example. In this case, a frequency band used by a downlink from the base station to the relay station is different from a frequency band used by a downlink from the relay station to the mobile station covered by the relay station, so that a frequency resource is divided. In frequency-division relay, different frequency bands (hereinafter referred to as "service bands") are used for respective downlinks, and this presents an advantage in that each of the base station and the relay station is required to perform resource scheduling of only the service band of its own station.

On the other hand, in time-division relay will be explained using a downlink, for example. In this case, a time resource is divided into a time resource used by a downlink from the base station to the relay station and a time resource used by a downlink from the relay station to the mobile station covered by the relay station. In time-division relay, there is an advantage in that it is not necessary to map a new frequency resource for repeating, but there is a time resource in which the relay station cannot transmit while the relay station receives a signal from the base station, and there is a problem in that the mobile station cannot continuously receive the signal from the base station. When the mobile station uses a signal strength as a reference of handover, there is a problem in that when the mobile station cannot determine the time resource in which the relay station does not transmit any signal, the mobile station uses, as a reference for handover, the signal strength in the time resource in which the relay station does not transmit any signal.

In LTE (Long Term Evolution) -Advanced, a mobile station of Release 8 of the LTE is considered to be accommodated in a relay station. When the relay station accommodates the mobile station of the LTE, a reference signal (RS) used for measuring the signal strength is required to be transmitted in all sub-frames (in units of time resources).

In order to solve such problems, Non-Patent Literature 1 suggests a method for causing the relay station to allocate a MBSFN (Multicast/Broadcast over Single Frequency Network) sub-frame to the mobile station in the time resource in which the base station transmits the signal to the relay station.

In Non-Patent literature 1, the relay station sets a sub-frame received from the base station as the MBSFN sub-frame for the mobile station connected to the relay station. The MBSFN sub-frame is a sub-frame for MBMS service. The MBMS service is not supported in the Release 8 version of the LTE. However, the Release 8 version of the LTE has the MBSFN sub-frame in order to maintain compatibility with a future update to a newer version which supports the MBMS service. The MBSFN sub-frame is configured to transmit a control signal and an RS in the head portion of the sub-frame and transmit the MBMS service in the remaining portion. Accordingly, the mobile station of the Release 8 of the LTE is characterized in receiving only the control signal and the RS in the head portion and disregarding an OFDM symbol in the remaining portion when receiving an MBSFN sub-frame.

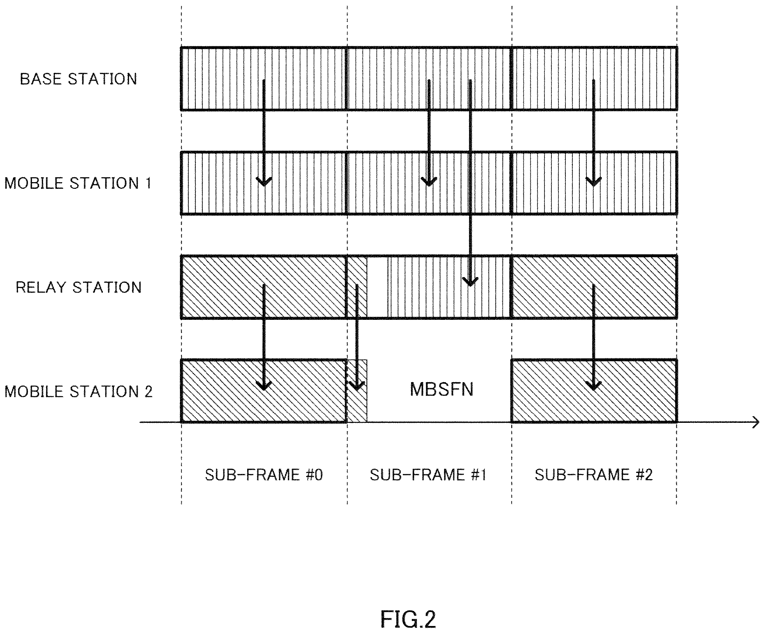

A fake MBSFN is a technique of transmission from a relay station to a mobile station using an MBSFN sub-frame by making use of this feature. As shown in sub-frame #1 of FIG.2, the relay station sets an MBSFN sub-frame for the mobile station. However, the relay station actually transmits only a control signal and an RS in the head portion of the sub-frame to the mobile station but in the remaining portion, the relay station does not transmit the MBMS service and instead receives a signal from a base station. In this manner, the fake MBSFN is advantageous in that the TD relay can be achieved while the mobile station of the Release 8 of the LTE is accommodated in the relay station.

In the fake MBSFN, two patterns of systems are considered in accordance with transmission timing (which may also be hereinafter referred to as "frame timing") of frames transmitted from the cell of the base station and the cell of the mobile station. In the first case, as shown in Non-Patent literature 2, the frame timing is synchronized between the base station and the mobile station (the frames are synchronized) as shown in FIG.2. In this case, in the fake MBSFN, while the base station transmits a control signal, the relay station also transmits a control signal. Therefore, the relay station cannot receive the control signal transmitted from the base station. Therefore, it is necessary for the base station to separately transmit the relay station control signal.

In the second case, the frame timing is different between the base station and the relay station (the frames are not synchronized). In this case, when the transmission timing is configured such that the relay station receives the mobile station control signal from the base station during reception period of the relay station, the relay station can receive an OFDM symbol having the mobile station control signal mapped therein. The base station make the OFDM symbol having the mobile station control signal mapped therein such that the OFDM symbol includes the relay station control signal, and transmits the mobile station control signal and the relay station control signal in the same OFDM symbol. As described above, when the mobile station control signal and the relay station control signal can be mapped in the same OFDM symbol, it is not necessary to define a new transmission format for the relay station control signal.

US 2008/175215 discloses an apparatus and method for transmitting frame information in a wireless communication system using a relay scheme. In a method for transmitting frame information from an upper node in the wireless communication system, downlink section information for communication with the lower relay station for a relay service is transmitted to a lower relay station at the request of the lower relay station for an initial connection. After the initial connection, frame information for communication with the lower relay station for a relay service is transmitted to the lower relay station through the downlink section.

EP 2 393 252 discloses a method and system for transmitting a relay link control channel are disclosed for realizing the mapping and transmission of a control channel on a link from an eNode-B to a relay node. In a frequency division multiplex mode, control information is carried by one or more resource blocks in the frequency direction and the universal set of OFDM symbols available to a relay link in a subframe in the time direction; in a time division and frequency division multiplex mode, control information is carried by one or more resource blocks in the frequency direction and a subset of OFDM symbols available to a relay link in a subframe in the time direction; in a time division multiplex mode, control information is carried by all the resource blocks in the frequency direction and a subset of OFDM symbols available to a relay link in a subframe in the time direction; and the mapping of the control channel includes mapping in the time direction and/or the frequency direction. The technique has backward compatibility and can obtain frequency diversity again.

### Citation List

### Non-Patent Literature

NPL 1
   3GPP RANI #55, R1-084357, "Efficient support of relaying through MBSFN subframes"
NPL 2
   3GPP RANI #55, R1-090222, "Consideration on Resource Allocation for Relay Backhaul Link"

### Summary of Invention

### Technical Problem

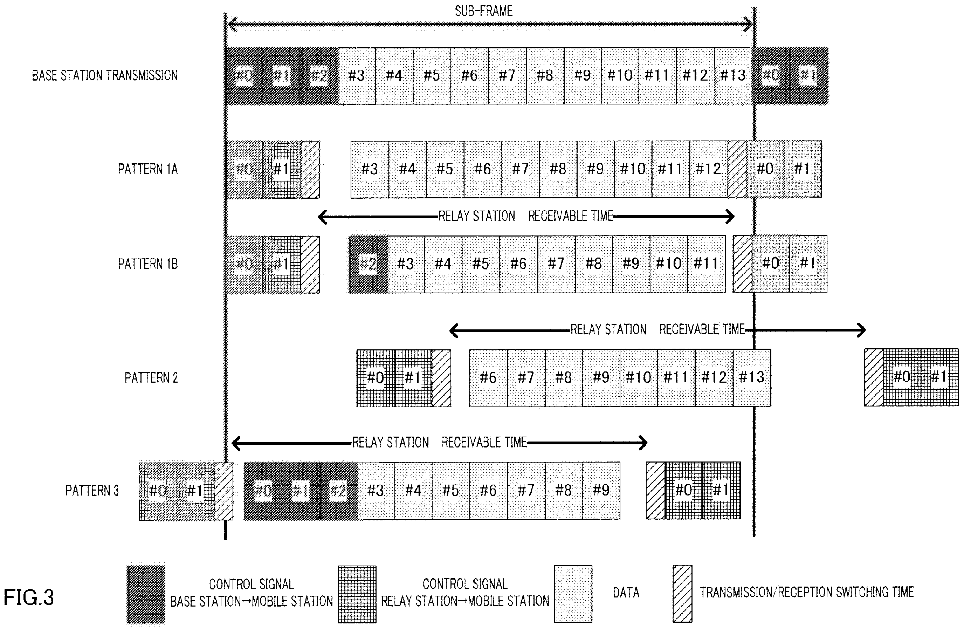

However, the above consideration about the frame timing between the base station and the relay station is based on the assumption that the frames are synchronized between the relay stations, and difference of frame timing between the relay stations is not taken into consideration. However, in the TD relay, transmission timing of frames transmitted from the relay station to the mobile station may be different for each relay station. Therefore, a range of OFDM symbols in which the relay station can receive OFDM symbols from the base station (which may also be hereinafter referred to as "reception range") may be different for each relay station. Further, the reception range is different for each relay station due to difference in a propagation delay time caused by difference of distance between the base station and the relay station. The difference of the reception range of the relay station will be hereinafter explained with reference to FIG.3.

FIG.3 is a figure illustrating an example of relationship between frame timing of a base station and frame timing of a relay station. In FIG.3, #0 to #13 denote OFDM symbol numbers, and a sub-frame is constituted by OFDM symbols #0 to #13.

### [Pattern 1A]

Patterns 1A and 1B of FIG.3 are examples where the frame timing of the base station and the frame timing of the relay station are synchronized. The difference between pattern 1A and pattern 1B is difference of a propagation delay time between the base station and the relay station. The difference of the propagation delay time will be explained later.

Now, attention is given to pattern 1A. After the relay station transmits OFDM symbols #0 and #1 to the mobile station, the relay station switches from transmission mode to reception mode to receive OFDM symbols #3 to #12. Therefore, while the relay station of pattern 1A transmits OFDM symbols #0 and #1, the relay station cannot receive OFDM symbols #0 and #1 having a control signal mapped therein transmitted from the base station.

In addition, while the relay station switches from the transmission mode to the reception mode, the relay station of pattern 1A cannot receive OFDM symbol #2 either. In addition, while the relay station switches from the reception mode to the transmission mode, the relay station cannot receive OFDM symbol #13 due to the propagation delay between the base station and the relay station. This is because, in order for the relay station to transmit OFDM symbol #0 in a subsequent sub-frame while keeping frame synchronization with the base station, the relay station needs to switch from the reception mode to the transmission mode before the start of the sub-frame, but the relay station does not receive OFDM symbol #13 before switching from the reception mode to the transmission mode due to the propagation delay.

### [Pattern 2]

Pattern 2 is an example where the frame timing of the relay station is later than the frame timing of the base station. The relay station of pattern 2 transmits OFDM symbols #0 and #1. Thereafter, the relay station switches from the transmission mode to the reception mode, and receives OFDM symbols #6 to #13.

### [Pattern 3]

Pattern 3 is an example where the frame timing of the relay station is earlier than the frame timing of the base station. The relay station of pattern 3 transmits OFDM symbols #0 and #1. Thereafter, the relay station switches from the transmission mode to the reception mode, and receives OFDM symbols #0 to #9.

As described above, the difference of frame timing between the base station and the relay station causes difference in the range of OFDM symbols that can be received by the relay station.

Subsequently, the difference of the reception range of the relay station due to difference of a propagation delay time between the base station and the relay station will be hereinafter explained. Both of pattern 1A and pattern 1B show examples where the frame timing of the base station is synchronized with the frame timing of the relay station, but pattern 1B shows an example in which the propagation delay from the base station is longer than pattern 1A. Pattern 1B has a longer propagation delay than pattern 1A, and therefore, in pattern 1B, OFDM symbol #2 that cannot be received in pattern 1A can be received. On the other hand, OFDM symbol #12 that can be received in pattern 1A cannot be received in pattern 1B since OFDM symbol #12 arrives during the switching from the reception mode to the transmission mode.

As described above, not only the difference of frame timing but also the difference of the propagation delay time between the base station and the relay station causes difference in the OFDM symbol range that can be received by the relay station. When there is difference in the receivable range of the OFDM symbol, the base station needs to define a transmission format for each relay station.

The present invention is made in view of the above problems, and it is an object of the present invention to provide a transmission method and a base station capable of transmitting a control signal for each relay station using a common transmission format in a time-division relay.

### Solution to Problem:

The present invention attains the above object by means defined in the independent claims. Preferred embodiments are claimed in the dependent claims.

### Advantageous Effects of Invention

According to the present invention, a control signal for each relay station can be transmitted using a common transmission format in a time-division relay.

### Brief Description of Drawings

FIG. 1 is a schematic diagram illustrating a radio communication system including a relay station;
FIG.2 is a figure for illustrating a fake MBSFN;
FIG.3 is a figure illustrating an example of relationship between frame timing of a base station and frame timing of a relay station;
FIG.4 is a block diagram illustrating a configuration of a base station according to Embodiment 1 of the present invention;
FIG.5 is a block diagram illustrating a configuration of a relay station according to Embodiment 1;
FIG.6 is a figure illustrating mapping example #1 in Embodiment 1;
FIG.7 is a figure illustrating mapping example #2 in Embodiment 1;
FIG.8 is a figure illustrating mapping example #3 in Embodiment 2 of the present embodiment;
FIG.9 is a block diagram illustrating a configuration of a base station according to Embodiment 2;
FIG.10 is a block diagram illustrating a configuration of a relay station according to Embodiment 2;
FIG.1 1 is a figure illustrating mapping example #4 in Embodiment 2;

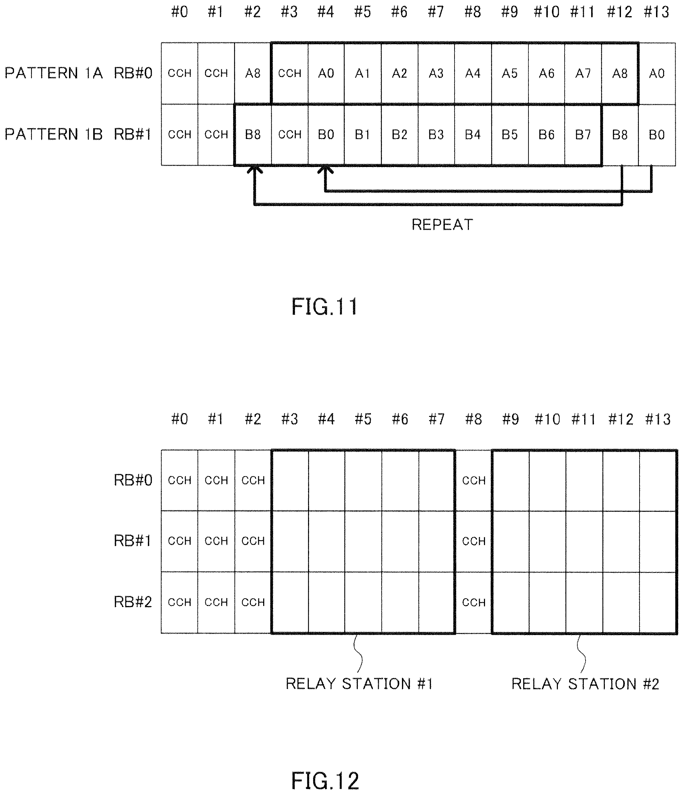

FIG.12 is a figure illustrating mapping example #5 in Embodiment 3 of the present invention;

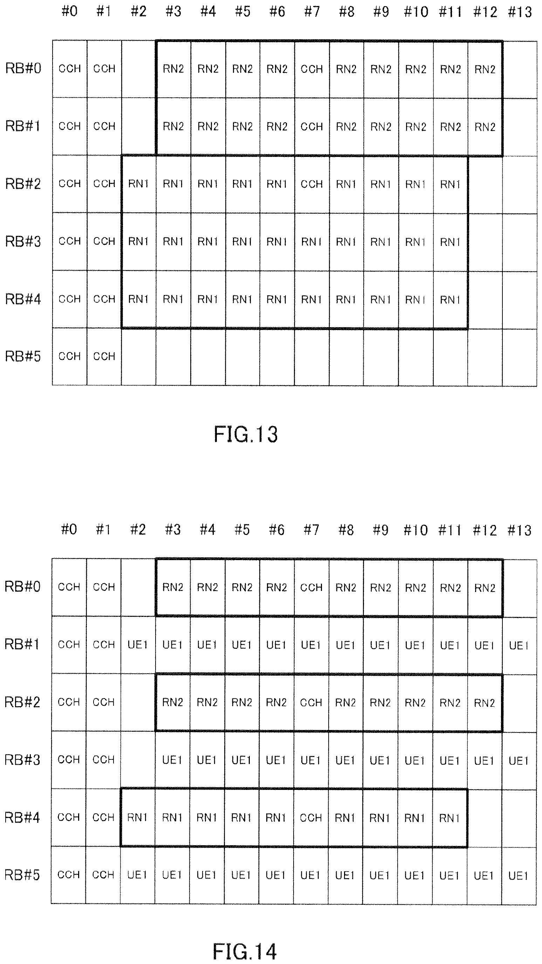

FIG.13 is a figure illustrating another mapping example in Embodiment 3;
FIG.14 is a figure illustrating still another mapping example in Embodiment 3;

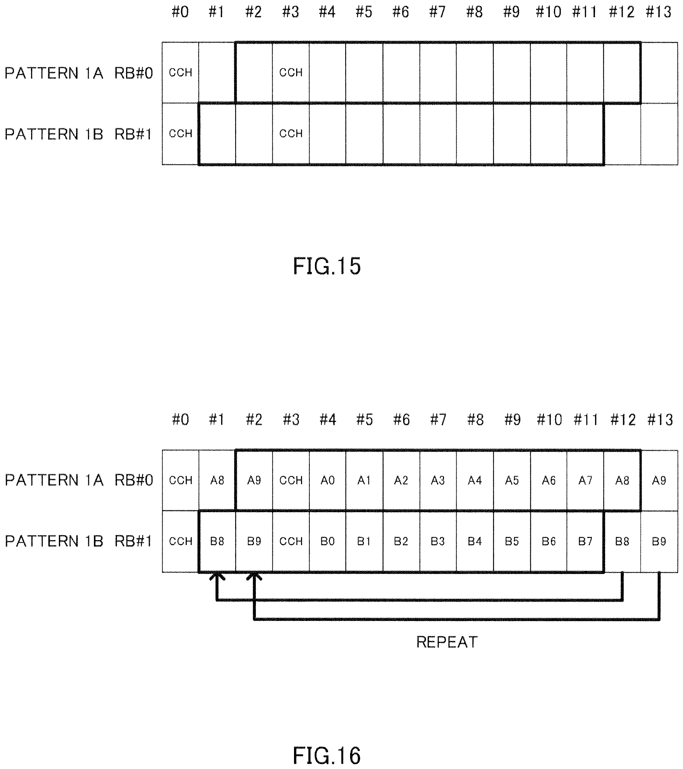

FIG.15 is a figure illustrating still another mapping example in Embodiment 3; and
FIG.16 is a figure illustrating still another mapping example in Embodiment 3.

### Description of Embodiments

Embodiments of the present invention will be hereinafter explained in detail with reference to drawings.

As shown in FIG.1, a radio communication system in each Embodiment includes a base station, a mobile station, and a relay station for repeating a transmission signal from the base station to the mobile station. The relay station time-divisionally repeats the transmission signal from the base station to the mobile station. In the explanation below, two-hop repeating will be explained, in which a signal transmitted from the base station to the relay station is transmitted by the relay station to the mobile station. It is assumed that the radio communication system includes not only a mobile station of the LTE covered by the base station but also a mobile station of the LTE-Advanced covered by the relay station.

In the explanation below, control signals mean a PDCCH (Physical Downlink Control Channel), a PHICH (Physical Hybrid ARQ Indicator Channel), and a PCFICH (Physical Control Format Indicator Channel). These control signals are diffused in a frequency axis and transmitted. The mobile station detects control signals addressed to the mobile station by performing blind decision on the diffused control signals, and performs reception processing.

The PDCCH is used to notify resource information about downlink, resource information about uplink, a transmission power control command of a PUSCH (Physical Downlink Shared Channel) or a PUCCH (Physical Uplink Shared Channel).

The PDCCH is mapped to 1 to 3 OFDM symbols at the head of a sub-frame in units of REGs (Resource Element Groups (=4 REs (Resource Elements)). It should be noted that information about the number of OFDM symbols to which the PDCCH is mapped is notified by the PCFICH. The number of OFDM symbols of the control signals is determined by the number of OFDM symbols of the PDCCH. There fore, the number of OFDM symbols of the PDCCH notified by the PCFICH is the number of OFDM symbols of the control signals. However, when the width of the service band is equal to or less than 10 RBs, the number of OFDM symbols of the PDCCH is 2 to 4.

In the explanation below, the relay station allocates an MBSFN sub-frame for the mobile station covered by the relay station. Since the number of OFDM symbols in which the PDCCH for the MBSFN sub-frame is mapped is 1 or 2, the relay station transmits 1 or two OFDM symbols to the mobile station as the control signals. In the explanation below, for example, the relay station mainly transmits control signals constituted by two OFDM symbols to the mobile station.

### (Embodiment 1)

In the explanation about the present embodiment, a relay station maintaining frame synchronization between the base station and the relay station and a relay station not maintaining frame synchronization exist in a mixed manner. In the present embodiment, the base station maps the relay station control signal in a symbol mapped and transmitted in proximity to the center of a sub-frame. Therefore, in the TD relay, all the relay stations can receive the control signals even when the range of OFDM symbols in which each relay station can receive is different.

### [Configuration of base station]

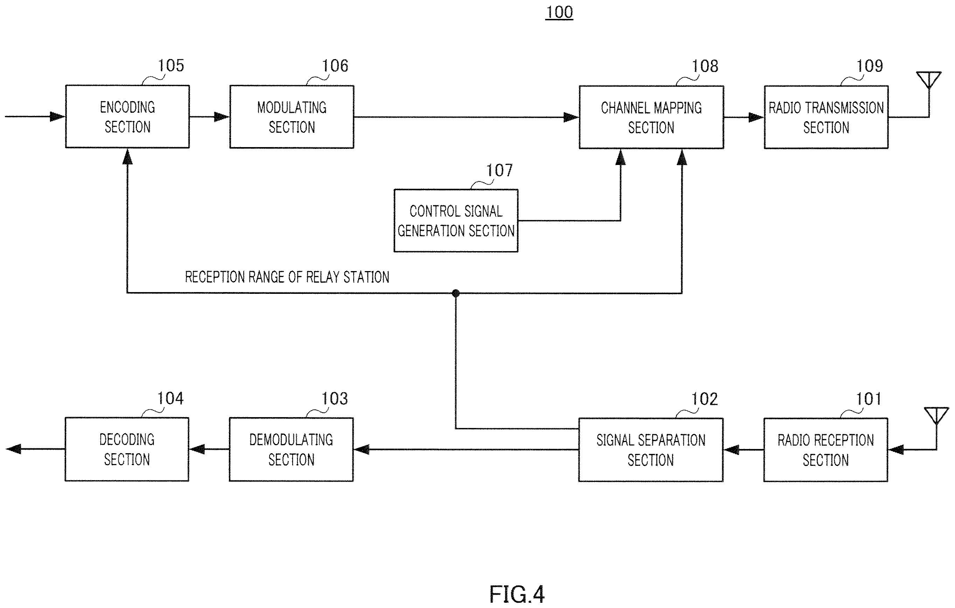

FIG.4 is a block diagram illustrating a configuration of a base station according to the present embodiment.

Radio reception section 101 receives a signal transmitted from the mobile station via an antenna, obtains a modulated signal by performing radio processing such as down-conversion, and outputs the resulting modulated signal to signal separation section 102.

Signal separation section 102 separates the modulated signal into a data signal and a signal representing a reception range of the relay station transmitted from the relay station. The reception range of the relay station is a range of the OFDM symbols that the relay station can receive within the sub-frame. Then, signal separation section 102 outputs the data signal to demodulating section 103, and outputs a signal representing the reception range of the relay station to encoding section 105 and channel mapping section 108.

Demodulating section 103 demodulates the data signal, obtains a demodulated data signal, and outputs the obtained, demodulated data signal to decoding section 104.

Decoding section 104 obtains decoded data by decoding the demodulated data signal, and outputs the obtained, decoded data to an error determination section, not shown.

Encoding section 105 receives the signal representing the reception range of the relay station from signal separation section 102, adjusts the number of symbols of a transmission signal to be encoded in accordance with the reception range of the relay station, encodes the transmission signal to generate an encoded signal, and outputs the generated, encoded signal to modulating section 106.

Modulating section 106 modulates the encoded signal to generate a modulated signal, and outputs the generated modulated signal to channel mapping section 108.

Control signal generation section 107 generates the mobile station control signal and the relay station control signal, and outputs the mobile station control signal and the relay station control signal to channel mapping section 108.

Channel mapping section 108 maps the mobile station control signal, the relay station control signal, the data signal for the mobile station, and the data signal for the relay station in a sub-frame, and outputs the mapped, modulated signal to radio transmission section 109. It should be noted that channel mapping section 108 maps the data signal for the relay station in accordance with the reception range of the relay station. Mapping examples of channel mapping section 108 will be explained later.

Radio transmission section 109 generates a transmission signal by performing radio processing such as up-conversion on the modulated signal, and transmits the transmission signal from an antenna to the mobile station covered by the base station or to the relay station.

### [Configuration of relay station]

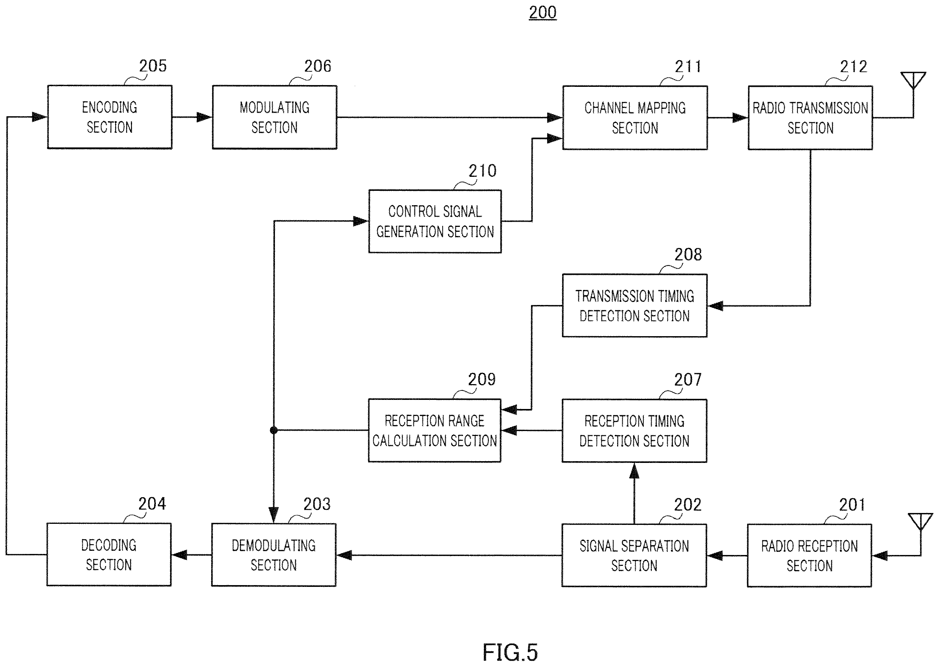

FIG.5 is a block diagram illustrating a configuration of a relay station according to the present embodiment.

Radio reception section 201 receives a signal transmitted from the base station via an antenna, obtains a modulated signal by performing radio processing such as down-conversion, and outputs the resulting modulated signal to signal separation section 202.

Signal separation section 202 separates the modulated signal into a data signal and a synchronization signal, outputs the data signal to demodulating section 203, and the synchronization signal to reception timing detection section 207.

Demodulating section 203 demodulates the data signal, obtains a demodulated data signal, and outputs the obtained, demodulated data signal to decoding section 204.

Decoding section 204 obtains decoded data by decoding the demodulated data signal, and outputs the obtained, decoded data to an error determination section, not shown, and encoding section 205.

Encoding section 205 encodes the decoded data output from decoding section 204 so as to generate an encoded signal, and outputs the encoded signal to modulating section 206.

Modulating section 206 modulates the encoded signal to generate a modulated signal, and outputs the modulated signal to channel mapping section 211.

Reception timing detection section 207 detects reception timing using the synchronization signal, and outputs the detected reception timing to reception range calculation section 209.

Transmission timing detection section 208 detects transmission timing of frames that are transmitted by the relay station to the mobile station, and outputs the detected transmission timing to reception range calculation section 209.

Reception range calculation section 209 calculates the range of OFDM symbols that can be received by the relay station (the reception range of the relay station) from difference between the reception timing of the frame transmitted from the base station and the transmission timing of the frame of its own station, and outputs information about the reception range of the relay station to demodulating section 203 and control signal generation section 210.

Control signal generation section 210 generates a base station control signal including the information about the reception range of the relay station, and outputs the generated control signal to channel mapping section 211.

Channel mapping section 211 maps the mobile station control signal covered by the relay station in a sub-frame, and outputs the mapped, modulated signal to radio transmission section 212. Further, channel mapping section 211 maps the base station control signal in the sub-frame, and outputs the mapped, modulated signal to radio transmission section 212.

Radio transmission section 212 generates a transmission signal by performing radio processing such as up-conversion on the modulated signal, and transmits the transmission signal from an antenna to the mobile station covered by the relay station or to the base station. Further, radio transmission section 212 outputs the transmission signal to transmission timing detection section 208.

Subsequently, mapping examples of the relay station control signal and the data signal according to the present embodiment will be explained.

### [Mapping example # 1]

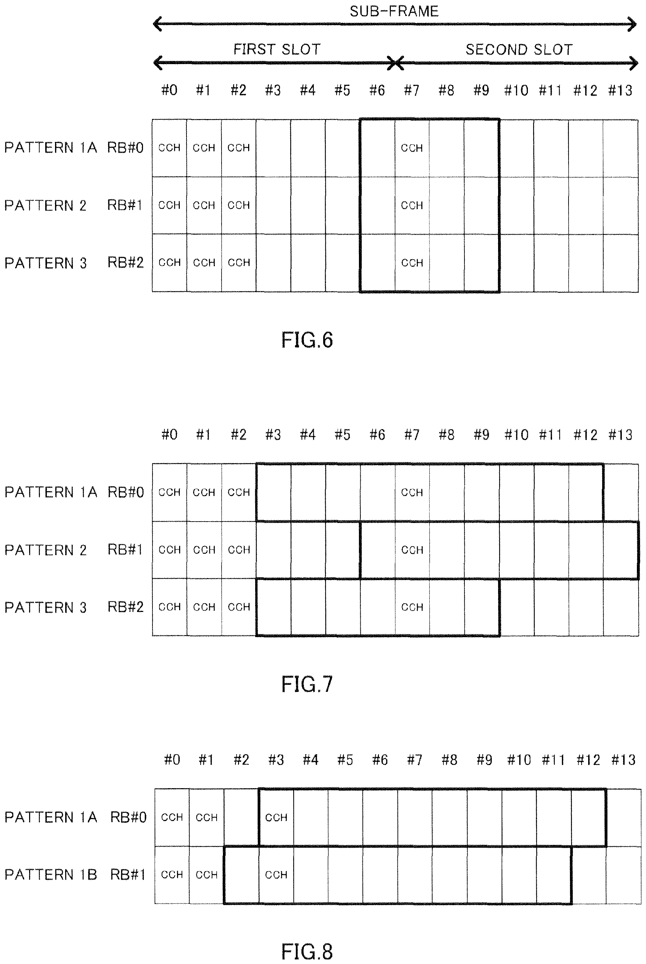

FIG.6 illustrates mapping example #1. In FIG.6, #0 to #13 denote OFDM symbol numbers within a sub-frame. It should be noted that the sub-frame is divided into two slots. The first slot is constituted by OFDM symbols #0 to #6. The second slot is constituted by OFDM symbols #7 to #13.

On the other hand, RB (Resource Block) #0, RB #1, RB #2 are resource blocks allocated to the respective relay stations. In this case, the resource block is a unit of resource. One resource block is constituted by twelve sub-carriers (frequency direction) × 1 slot (time direction). FIG.6 shows an example where the base station respectively allocates RB #0, RB #1 and RB #2 to the relay stations of pattern 1A, pattern 2 and pattern 3 as shown in FIG.3.

In each of pattern 1, pattern 2 and pattern 3, the range of OFDM symbols in which each relay station can receive is different. For example, in pattern 1A, the reception range of the relay station includes OFDM symbols #3 to #12. In pattern 2, the reception range of the relay station includes OFDM symbols #6 to #13. In pattern 3, the reception range of the relay station includes OFDM symbols #3 to #9.

In FIG.6, the control signal (CCH: Control CHannel) mapped in OFDM symbols #0 and #1 and #2 is transmitted to the mobile station covered by the base station. As described above, in the MBSFN service, while the base station transmits OFDM symbols #0 and #1, the relay station transmits a signal to the mobile station covered by the relay station. Therefore, the relay station cannot receive the control signal mapped in OFDM symbols #0 and #1 and #2.

For this issue, the present embodiment is configured such that the base station maps the relay station control signal in the range of OFDM symbols that can be commonly received by all the relay stations, and transmits the control signal. For example, in the example of FIG.6, the range of OFDM symbols that can be commonly received by all the relay stations is OFDM symbols #6 to #9 (black frame in FIG.6), and therefore, the relay station control signal is mapped in any one of OFDM symbols #6 to #9. At this occasion, an OFDM symbol in proximity to the center of the sub-frame is expected to be included in the range of OFDM symbols that can be commonly received by all the relay stations. FIG.6 is an example where the relay station control signal is mapped in OFDM symbol #7 in proximity to the center of the sub-frame.

As described above, in mapping example #1, the base station maps the relay station control signal in the OFDM symbol in proximity to the center of the sub-frame. Therefore, the relay station control signal can be received by all the relay stations with different frame timing. At this occasion, the base station makes the relay station control signal such that the control signal includes the resource information about the downlink, the resource information about the uplink of the relay station, and the like, and when the relay station receives the relay station control signal, the relay station can obtain information of the RB allocated to its own station from the received control signal.

Further, not only the OFDM symbol having the relay station control signal mapped therein but also a data signal are mapped by the base station in the range of OFDM symbols that can be commonly received by all the relay stations. More specifically, in FIG.6, the base station maps the data signal in the OFDM symbols other than OFDM symbol #7 having the relay station control signal mapped therein from among the OFDM symbols #6 to #9 (black frame in FIG.6).

In this manner, the relay station control signal and the data signal for the relay station are mapped and transmitted in the OFDM symbols that can be commonly received by all the relay stations, and there is an advantage in that, whichever relay station the base station transmits the signal to, the base station can use the common transmission format which does not make the control complicated.

When the second slot of the sub-frame is constituted by OFDM symbols #7 to #13, OFDM symbol #7 having the relay station control signal mapped therein is the head of the OFDM symbols of the second slot. The OFDM symbol in proximity to the center of the sub-frame is expected to be included in the range of OFDM symbols that can be commonly received by all the relay stations, and therefore, when the relay station control signal is mapped and transmitted in the OFDM symbol at the head of the second slot of the sub-frame, all the relay stations can receive the relay station control signal.

Scheduling information such as MSC (Modulation Coding Schemes) or RB is determined based on a reception result of the reference signal (RS). The LTE maps the reference signal (RS) in OFDM symbol #7. Therefore, when the relay station control signal is mapped and transmitted in the OFDM symbol in which the reference signal (RS) is transmitted, the relay station control signal is scheduled in a preferable manner, which can improve the reception quality of the relay station control signal.

As described above, in mapping example #1, the base station maps the relay station control signal in the OFDM symbol in proximity to the center of the sub-frame. Therefore, in the TD relay, all the relay stations can receive the control signals even when the range of OFDM symbols in which each relay station can receive is different. The data signal is mapped in any one of the OFDM symbols in the range of OFDM symbols that can be commonly received by all the relay stations. With the above mapping, it is not necessary for the base station to change the transmission format for each relay station, and the common transmission format can be used. Further, the relay station control signal is mapped and transmitted in the OFDM symbol having the reference signal (RS) mapped therein, so that the reception quality of the relay station control signal can be improved.

### [Mapping example #2]

FIG.7 is a figure illustrating mapping example #2. Like mapping example #1, mapping example #2 shows an example where the base station respectively allocates RB #0, RB #1 and RB #2 to the relay stations of pattern 1A, pattern 2 and pattern 3 as shown in FIG.3.

Like mapping example #1, the base station maps and transmits the relay station control signal in OFDM symbol #7 to all the relay stations in mapping example #2 as shown in FIG.7. In mapping example #1, the data signal for the relay station is mapped in the range of OFDM symbols that can be commonly received by all the relay stations. In mapping example #2, however, the range in which the data signal for the relay station is mapped is changed for each relay station.

More specifically, the reception range of the relay station of pattern 1A is OFDM symbols #3 to #12. Accordingly, the base station maps and transmits the data signal for the relay station in OFDM symbols #3 to #12.

The reception range of the relay station of pattern 2 is OFDM symbols #6 to #13. Accordingly, the base station maps and transmits the data signal for the relay station in OFDM symbols #6 to #13.

The reception range of the relay station of pattern 3 is OFDM symbols #3 to #9. However, a PDCCH for the mobile station is allocated to OFDM symbols #0 to #2, and accordingly, the base station maps and transmits the data signal for the relay station in OFDM symbols #3 to #9.

In this configuration, in mapping example #2, the number of OFDM symbols in which the data signal for the relay station can be mapped is more than that of mapping example #1. More specifically, in mapping example #1, the number of OFDM symbols that can be mapped in the data signal for the relay station is three in each of RB #0, RB #1 and RB #2. In contrast, in mapping example #2, the number of OFDM symbols that can be mapped in the data signal for the relay station is 9 in RB #0, 7 in RB #1, and 6 in RB #2, which improves the efficiency of use of the resources.

As described above, in mapping example #2, the base station maps the relay station control signal in the OFDM symbol in proximity to the center of the sub-frame, and maps the data signal for the relay station in any one of the OFDM symbols in the range of OFDM symbols that can be received by the relay station. Therefore, the efficiency of use of the resources can be improved as compared with mapping example #1.

In the explanation above, reception range calculation section 209 of the relay station calculates the range of OFDM symbols (the reception range of the relay station) that can be received by the relay station, from the difference between the reception timing and the transmission timing. Alternatively, the reception range of the relay station may be calculated using the method below.
(1) A case where transmission timing of frames between the base station and the relay station is synchronized (synchronization is maintained) The relay station uses a TA (Time alignment) signal to calculate the range of OFDM symbols that can be received by its own station. The TA signal is a signal that is used by the base station so as to notify the relay stations of the amount of adjustment of transmission timing of the uplink in accordance with propagation delay time between the base station and the relay stations so that the frames transmitted from the relay stations synchronously reach the base station. Therefore, the relay station can find the propagation delay time between the base station and the relay station from the TA signal, and therefore, can calculate the reception range of its own station from the propagation delay time. Likewise, the base station can find the propagation delay time between the base station and the relay station from the TA signal for the relay station, and therefore, can calculate the reception range of the relay station from the propagation delay time.
(2) A case where transmission timing of frames between the base station and the relay station is not synchronized (synchronization is not maintained) The relay station may notify the base station of the difference between the reception timing of the frames transmitted from the base station and the transmission timing of the frames of its own station, and the base station may calculate the reception range of the relay station from the difference between the reception timing and the transmission timing.

According to the above methods, the relay station can share, with the base station, the difference of transmission timing of the frames of the relay station (frame timing) or information about the propagation delay time between the base station and the relay station, and the base station can calculate the reception range of the relay station for each relay station.

The base station maps and transmits the relay station control signal and the data signal in the reception range of the relay station thus calculated. The relay station calculates the reception range of its own station according to the above methods and the like, and receives the data signal of the RB notified by the relay station control signal.

The relay station does not know which RB is allocated to its own station until the relay station receives the relay station control signal. Accordingly, the reception signal is saved in a buffer, and the reception processing is retroactively performed on the reception signal after the reception processing is performed on the relay station control signal.

### (Embodiment 2)

In the explanation about the present embodiment, frame synchronization between a base station and a relay station is substantially maintained. In the explanation about the present embodiment, for example, the mobile station control signal transmitted from the base station is mapped in two OFDM symbols.

### [Mapping example #3]

FIG.8 illustrates mapping example #3. In FIG.8, the relay station of pattern 1A of FIG.3 is allocated in RB #0, and the relay station of pattern 1B of FIG.3 is allocated in RB #1. In this example, the relay station of pattern 1A and the relay station of pattern 1B substantially maintain frame synchronization with the base station.

The reception range of the relay station of pattern 1A is OFDM symbols #3 to #12. The reception range of the relay station of pattern 1B is OFDM symbol #2 to #11. At this occasion, the range of OFDM symbols that can be commonly received by all the relay stations is #3 to #11.

In the present embodiment, the base station maps the relay station control signal in an OFDM symbol whose OFDM symbol number is the smallest from among the OFDM symbols that can be commonly received by all the relay stations. More specifically, in the example of FIG.8, the base station maps and transmits the relay station control signal in OFDM symbol #3. In this manner the relay station control signal is mapped in OFDM symbol #3 of the sub-frame, and therefore, as compared with Embodiment 1, the reception processing can be started earlier, whereby the delay of reception processing in the relay station can be reduced.

More specifically, in mapping example #1 or mapping example #2 in Embodiment 1, the relay station control signal can be mapped in OFDM symbol #7 in proximity to the center of the sub-frame, and therefore, the relay station cannot start the reception processing of the data signal until the relay station receives OFDM symbol #7, and it takes a longer delay in processing until the reception processing of the data signal is started.

In contrast, when the relay station control signal is mapped in an OFDM symbol whose OFDM symbol number is the smallest from among the OFDM symbols that can be commonly received by all the relay stations, it takes a shorter delay in processing until the reception processing of the data signal is started in the relay station. For example, the relay station of pattern 1A can receive from OFDM symbol #3, and the relay station of pattern 1B can receive from OFDM symbol #2. Accordingly, when the relay station control signal is mapped in OFDM symbol #3 whose OFDM symbol number is the smallest from among the OFDM symbols that can be commonly received by the relay stations of pattern 1A and pattern 1B, the relay stations can start the reception processing of the data signal after OFDM symbol #3 is received.

It should be noted that when all the relay stations can receive OFDM symbol #2, the control signal can be mapped and transmitted in OFDM symbol #2. However, there is a possibility that the mobile station control signal may be mapped and transmitted in OFDM symbol #2. Then, it is impossible to determine whether the mobile station control signal is mapped in OFDM symbol #2 or not until a PCFICH included in OFDM symbol #1 is received. Therefore, it is preferable to map the relay station control signal in OFDM symbol #3, avoiding OFDM symbol #2.

Mapping example #3 as shown in FIG.8 is an example where the mobile station control signal transmitted from the base station is in two OFDM symbols, and in this case, the base station maps the data signal in OFDM symbol #2 for the relay station of pattern 1B. As described above, the data signal for the relay station is mapped in the OFDM symbol in which the mobile station control signal is not mapped in OFDM symbols #0 to #2, which improves the efficiency of use of the resources.

In order for the relay station to receive the data signal thus mapped, the relay station needs to know the number of OFDM symbols in which the mobile station control signal is mapped. In the LTE, the number of OFDM symbols in which the mobile station control signal is mapped is notified by the PCFICH included in OFDM symbol #0. However, while the base station transmits OFDM symbol #0, the relay station transmits a signal to the mobile station covered by the relay station, during which time it is difficult to receive the PCFICH. Accordingly, the base station makes the relay station control signal transmitted in OFDM symbol #3 such that the relay station control signal includes information representing the number of OFDM symbols in which the mobile station control signal is mapped.

In this manner, the information representing the number of OFDM symbols in which the mobile station control signal is mapped is included and transmitted in the relay station control signal mapped and transmitted in OFDM symbol #3, so that the data signal can be mapped and transmitted in OFDM symbol #2 to the relay station capable of receiving OFDM symbol #2, which improves the efficiency of use of the resources.

### [Configuration of base station]

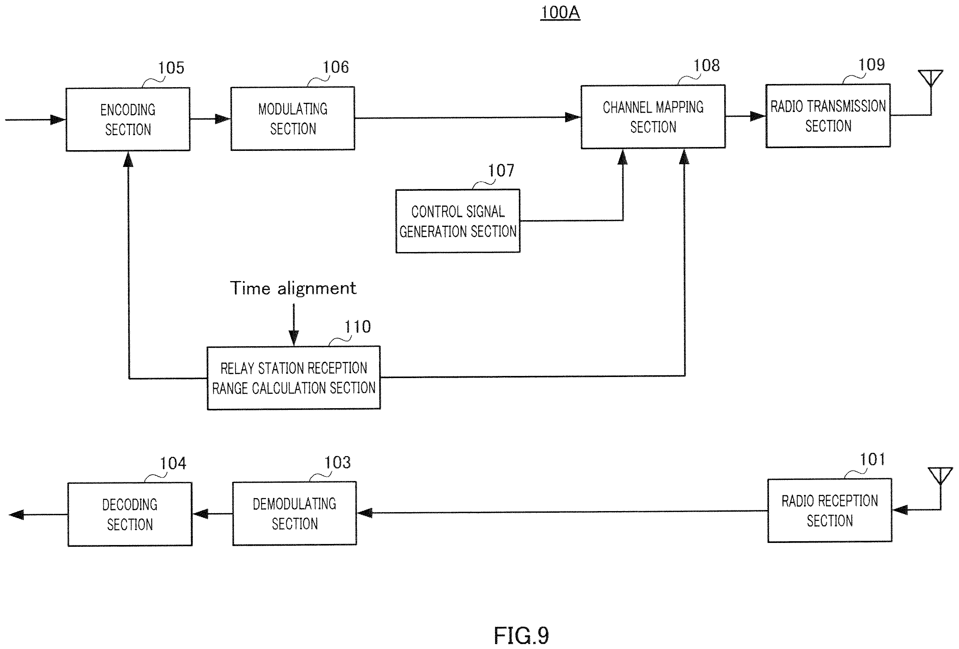

FIG.9 is a block diagram illustrating a configuration of a base station according to the present embodiment. FIG.9 is an example of configuration of a base station where frame synchronization between the base station and the relay station is maintained. In base station 100A of FIG.9, constituent portions common to those of base station 100 of FIG.4 are denoted with the same reference numerals as those of FIG.4, and description thereabout is omitted.

Relay station reception range calculation section 110 receives a TA signal, and uses the TA signal to calculate the range of OFDM symbols in which the relay station can receive (reception range). The TA signal is a signal that is used by the base station to notify the relay stations of the amount of adjustment of transmission timing of the uplink in accordance with propagation delay time between the base station and the relay stations so that the frames transmitted from the relay stations synchronously reach the base station. Therefore, the base station can find the propagation delay time between the base station and the relay station from the TA signal for the relay station, and therefore, can calculate the reception range of the relay station from the propagation delay time. Relay station reception range calculation section 110 outputs the calculated reception range of the relay station to encoding section 105 and channel mapping section 108.

### [Configuration of relay station]

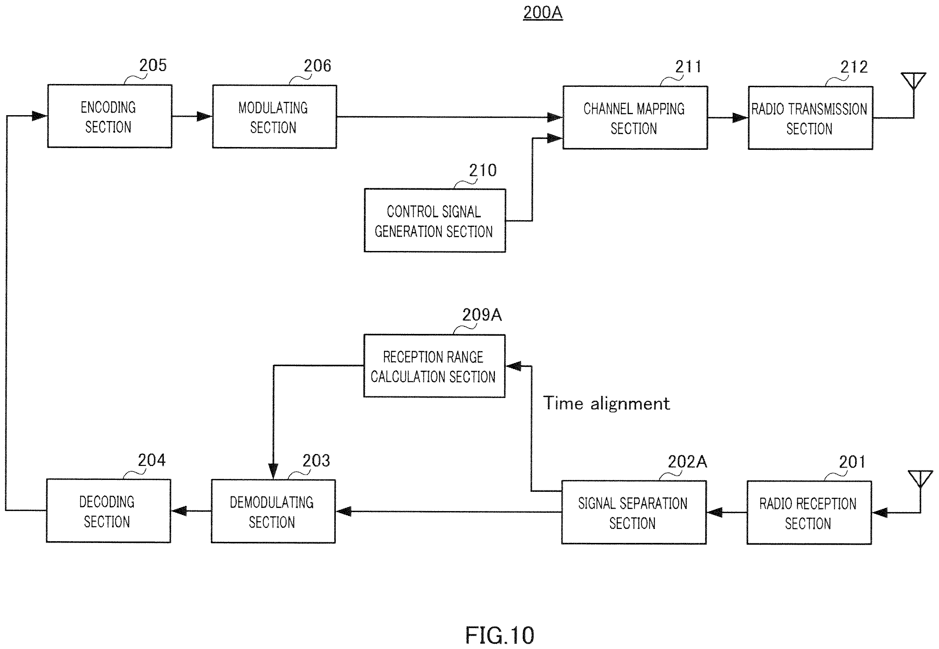

FIG.10 is a block diagram illustrating a configuration of a relay station according to the present embodiment. FIG.10 is an example of configuration of a relay station where frame synchronization between the base station and the relay station is maintained. In base station 200A of FIG.10, constituent portions common to those of relay station 200 of FIG.5 are denoted with the same reference numerals as those of FIG.5, and description thereabout is omitted.

Signal separation section 202A separates the modulated signal into a TA signal and a data signal, outputs the data signal to demodulating section 203, and the TA signal to reception range calculation section 209A.

Reception range calculation section 209A receives a TA signal, and uses the TA signal to calculate the range of OFDM symbols in which the relay station can receive (reception range). More specifically, first, reception range calculation section 209A calculates the propagation delay time between the base station and the relay station from the TA signal, and compares the propagation delay time and a switching time between the transmission mode and the reception mode. When the switching time is longer than the propagation delay time, the relay station cannot receive OFDM symbol #2, and accordingly, reception range calculation section 209A chooses OFDM symbol #3 as the head of the range of OFDM symbols that can be received by the relay station. On the other hand, when the switching time is shorter than the propagation delay time, the relay station can receive OFDM symbol #2, and accordingly, reception range calculation section 209A chooses OFDM symbol #2 as the head of the range of OFDM symbols that can be received by the relay station. Further, reception range calculation section 209A calculates the number of OFDM symbols included in the propagation delay time, calculates a number by subtracting the number of OFDM symbols included in the propagation delay time from the OFDM symbol number at the last of the sub-frame (#13), and sets the calculated number as the OFDM symbol number at the last of the range of OFDM symbols that can be received by the relay station. In this manner, reception range calculation section 209A calculates the reception range of the relay station.

### [Mapping example #4]

FIG.11 illustrates mapping example #4. Mapping example #4 is a modification of mapping example #3. Like mapping example #3, mapping example #4 is an example where the number of OFDM symbols in which the mobile station control signal is mapped is two, and the relay station control signal is mapped in OFDM symbol #3.

In mapping example #4 of FIG.1 1, the data signal is mapped in all the OFDM symbols of the sub-frame in which the mobile station control signal or the relay station control signal is not mapped. More specifically, when the mobile station control signal is mapped in OFDM symbols #0 and #1, and the relay station control signal is mapped in OFDM symbol #3, the data signal is mapped in OFDM symbols #2 and #4 to #13 in mapping example #4. However, in OFDM symbol #2, the same data signal as OFDM symbol #12 is mapped. In OFDM symbol #4, the same data signal as OFDM symbol #13 is mapped.

That is, the data signal for the relay station is mapped from the head in a forward direction from the OFDM symbol immediately after the OFDM symbol in which the control signal is mapped, and the data signal for the relay station is mapped from the end in a backward direction from the OFDM symbol immediately before the OFDM symbol in which the control signal is mapped. Therefore, the data signal mapped in the OFDM symbols at the rear of the sub-frame is repeatedly mapped in the OFDM symbols in the front of the sub-frame.

When the data signal is thus mapped, not only the relay station of pattern 1A whose reception range is OFDM symbols #3 to #12 but also the relay station of pattern 1B whose reception range is OFDM symbols #2 to #11 receive the same data signal regardless of the reception range. Further, the base station can map the data signal in the relay station without considering the propagation delay time of each relay station. At this occasion, as the number of repetitions within the sub-frame increases, a longer propagation delay time can also be supported.

It should be noted that, in mapping example #4, the head of the data signal (A0, B0) is mapped in OFDM symbol #4. In a system in which the reception processing is applied to the data signal in order from the head of the data, the reception processing is started earlier as the head of the data is received earlier, and this can reduce the amount of data stored in a buffer. Therefore, when the data signal is mapped in order from the OFDM symbol whose number is the smallest among the OFDM symbols that can be received by the relay station of pattern 1A and the relay station of pattern 1B, not only the relay station of pattern 1A but also the relay station of pattern 1B can perform the reception processing in shorter times. It should be noted that the relay station of pattern 1B stores, to a buffer, data signal B8 mapped and transmitted in OFDM symbol #2, and starts the reception processing from data signal B0.

It should be noted that, when the width of the supported band of the base station is equal to or less than 10 RBs, the number of OFDM symbols of the mobile station control signal may be four. Therefore, when the band width is equal to or less than 10 RBs, the relay station control signal is not mapped in OFDM symbol #3 but mapped in OFDM symbol #4, so as to ensure that the base station control signal does not overlap the relay station control signal regardless of the width of the supported band of the base station.

As described above, in the present embodiment, where D represents the maximum number of OFDM symbols including the mobile station control signal transmitted from the base station to the mobile station covered by the base station, the base station maps the relay station control signal at the (D+1)-th OFDM symbol within the sub-frame. Therefore, all the relay stations can receive the relay station control signal, and can perform the reception processing in a shorter time.

When the information representing the number of OFDM symbols in which the mobile station control signal is mapped is included and transmitted in the relay station control signal, the data signal can be mapped in the OFDM symbol in which the relay station control signal is not mapped among the maximum number of OFDM symbols D, which improves the efficiency of use of the resources.

### (Embodiment 3)

In the present embodiment, the range of OFDM symbols within the sub-frame that can be received by the relay station is divided into the first half and the latter half, and the base station maps the data signal in the first half and the latter half on the basis of the range of OFDM symbols that can be received by-the relay station.

### [Mapping example #5]

FIG.12 illustrates mapping example #5. Mapping example #5 as shown in FIG.12 is an example where the number of OFDM symbols in which the mobile station control signal is mapped is three. In other words, the mobile station control signal is mapped and transmitted in OFDM symbols #0 to #2.

In mapping example #5, OFDM symbols #3 to #13 are divided into the first half portion constituted by OFDM symbols #3 to #7 and the latter half portion constituted by OFDM symbol #9 to #13, and the base station maps the data signal for the relay station either in the first half portion or the latter half portion on the basis of the range of OFDM symbols that can be received by the relay station. It should be noted that the base station maps and transmits the relay station control signal in OFDM symbol #8. Since OFDM symbol #8 is located in the center between OFDM symbols #3 to #13, the relay station control signal is mapped in OFDM symbol #8. The first half portion is constituted by OFDM symbols whose numbers are less than OFDM symbol #8, and the latter half portion is constituted by OFDM symbols whose numbers are more than OFDM symbol #8, so that the relay station can receive the data signal continuously in time.

For example, when, as shown in pattern 1 or pattern 3 of FIG.3, the relay station has a relatively short propagation delay time between the base station and the relay station, and has the reception range of OFDM symbols #3 to #7, the data signal is mapped in the OFDM symbols in the first half portion of RB #0 to RB #2. On the other hand, when, as shown in pattern 2, the relay station has a long propagation delay time between the base station and the relay station, and has the reception range of OFDM symbols #9 to #13, the data signal is mapped in the OFDM symbols in the latter half portion of RB #0 to RB #2. In this manner, whether the OFDM symbols in the first half of the sub-frame or the OFDM symbols in the latter half of the sub-frame are used is determined on the basis of the propagation delay time between the base station and the relay station, and therefore, the resources can be efficiently used.

The range of OFDM symbols that can be received by the relay station is determined on the basis of the propagation delay time and the transmission timing of the frames between the base station and the relay station, and therefore, whether the resource in the first half of the sub-frame or the resource in the latter half of the sub-frame are used is determined on the basis of the propagation delay time and the transmission timing of the frames between the base station and the relay station. In other words, when the base station and the relay station share the information about the propagation delay time and the transmission timing of the frames, the base station and the relay station can share information about the resource in which the data signal is mapped. After the information about the resource in which the data signal is mapped is shared, the relay station can receive, continuously in time, the data signal mapped in one of the resource in the first half or the resource in the latter half even though the relay station control signal does not include any instruction as to whether the resource in the first half is used or the resource in the latter half is used.

When there is a pair of relay stations having different propagation delay times, a data signal of one of the relay stations can be mapped in the first half portion of the sub-frame, and a data signal of the other of the relay stations can be mapped in the latter half portion of the sub-frame, which improves the efficient use of the resources.

As described above, in the present embodiment, the OFDM symbols of the sub-frame other than the OFDM symbol in which the mobile station control signal is mapped is divided into the first half and the latter half, and the data signal for the relay station is mapped in either the first half or the latter half on the basis of the reception range of the relay station. Therefore, the resources can be efficiently used. Further, the relay station can receive the data signal continuously in time, and therefore, the reception processing can be completed in a shorter time.

It should be noted that dividing process into the first half and the latter half may be dividing process into the first slot and the second slot constituting the sub-frame. It should be noted that the ratio of division between the first half and the latter half may not be 1:1. When dividing into the first half and the latter half, the relay station control signal may be mapped in the OFDM symbol (for example, OFDM symbol #7) in proximity to the center of the sub-frame, like mapping example #1.

The data signal for the mobile station cannot be mapped in the RB in which the relay station control signal is mapped, and therefore, the RB in which the data signal for the mobile station can be mapped may be ensured by limiting the RB in which the relay station control signal is mapped. For example, FIG.13 is an example where the relay station control signal is gathered and mapped in successive RBs (RB #0 to RB #2). FIG.13 is an example where the relay station control signal is mapped in OFDM symbol #7 of RB #0 to RB #2. In this configuration, it is easy to continuously allocate the RBs (RB #3 to RB #5) to the data signal for the mobile station. FIG.14 is an example where the relay station control signal is distributed. FlG.14 is an example where the relay station control signal is mapped in OFDM symbol #7 of RB #0, RB #2 and RB #4. This improves the frequency diversity effect of the relay station control signal.

The relay station control signal and the data signal for the relay station may not be necessarily mapped in the same RB. For example, even when the relay station control signal is not mapped in an RB, the resource information for the relay station can be obtained from the relay station control signal mapped in another RB. In such case, the relay station can receive the data signal mapped in the RB in which the relay station control signal is not mapped.

In the above explanation, for example, the number of OFDM symbols of the control signals transmitted from the relay station to the mobile station in the fake MBSFN sub-frame is two. However, the number of OFDM symbols may be 1. When the number of OFDM symbols of the control signal transmitted by the relay station is 1, and the number of OFDM symbols of the control signal transmitted by the base station is also 1, the relay station can increase the number of receivable OFDM symbols by one as shown in FIG.15.

When the number of OFDM symbols of the control signal transmitted by the relay station is 1, and the number of OFDM symbols of the control signal transmitted by the base station is also 1, data signal A8 or data signal B8 can be mapped in OFDM symbol #1 and data signal A9 or data signal B9 can be mapped in OFDM symbol #2 by arranging the data signal as shown in FIG.15 in accordance with mapping example #4. Not only the relay station of pattern 1A but also the relay station of pattern 1B can increase the number of OFDM symbols that can be received from the base station, by 1 OFDM symbol.

It should be noted that the present invention can be applied to not only a system for switching transmission/reception within a sub-frame like the TD relay using the fake MBSFN but also a system for performing TD relay by switching the relay station between transmission mode and reception mode in units of sub-frames or in units of other processing times. In other words, even when reception timing of frames from the base station and transmission timing of frames from the relay station are different, the relay station control signal can be mapped at a position at which all the relay stations can commonly receive, and the data signal for the relay station can be mapped at a position at which the respective relay stations can receive. In this case, when the relay station can receive the control signal mapped in OFDM symbols #0 to #2 transmitted from the base station, the base station may not separately transmit the relay station control signal.

The relay station according to each of the above Embodiments may be also represented as a relay station, a repeater, a simplicity base station, and a cluster head.

In the above explanation about the above Embodiments, the antenna is used. However, the present invention can also be applied even when the antenna is an antenna port.

The antenna port includes one or a plurality of physical antennas, and means a theoretical antenna. In other words, the antenna port does not necessarily mean one physical antenna, and may sometimes mean an array antenna and the like including a plurality of antennas.

For example, 3GPP LTE does not define how many physical antennas constitute the antenna port, and defines the antenna port as the minimum unit that the base station can transmit different reference signals (RSs).

Alternatively, the antenna port may be defined as the minimum unit for multiplication for weighting of precoding vectors.

Also, although cases have been described with the above embodiment as examples where the present invention is configured by hardware, the present invention can also be realized by software.

Each function block employed in the description of each of the aforementioned embodiments may typically be implemented as an LSI constituted by an integrated circuit. "LSI" is adopted here but this may also be referred to as "IC," "system LSI," "super LSI," or "ultra LSI" depending on differing extents of integration.

Further, the method of circuit integration is not limited to LSI's, and implementation using dedicated circuitry or general purpose processors is also possible. After LSI manufacture, utilization of a programmable FPGA (Field Programmable Gate Array) or a reconfigurable processor where connections and settings of circuit cells within an LSI can be reconfigured is also possible.

Further, if integrated circuit technology comes out to replace LSI's as a result of the advancement of semiconductor technology or a derivative other technology, it is naturally also possible to carry out function block integration using this technology. Application of biotechnology is also possible.

### Industrial Applicability

The present invention allows transmission of control signals for respective relay station apparatuses using a common transmission format in a time-division relay, and is effective as a base station apparatus, a transmission method, and the like for time-division relay.

### Reference Signs List

100, 100A Base station
200, 200A Relay station
101, 201 Radio reception section
102, 202, 202A Signal separation section
103, 203 Demodulating section
104, 204 Decoding section
105, 205 Encoding section
106, 206 Modulating section
107, 210 Control signal generation section
108, 211 Channel mapping section
109, 212 Radio transmission section
110 Relay station reception range calculation section
207 Reception timing detection section
208 Transmission timing detection section
209, 209A Reception range calculation section

## Claims

1. A base station apparatus (100) for use in a radio communication system in which a time resource used for downlink from the base station apparatus to a relay station apparatus (200) and a time resource used for downlink from the relay station apparatus to a mobile station apparatus covered by the relay station apparatus are time-divided within a predetermined period, the base station apparatus comprising:
a mapping section (108) adapted to map a physical downlink control channel for the mobile station apparatus to first one or more symbols from the beginning of the predetermined period and to map a control signal for the relay station apparatus to a symbol in the predetermined period; and
a transmission section (109) adapted to transmit the mapped physical downlink control channel and the mapped control signal for the relay station apparatus,
wherein the symbol, to which the mapping section is adapted to map the control signal for the relay station apparatus, is a (D+1)-th symbol in the predetermined period, wherein D denotes a maximum number of symbols, to which the physical downlink control channel for the mobile station apparatus is mapped; and
wherein:
the radio communication system supports a long term evolution system, the predetermined period is a sub-frame length, the mapping section is adapted to calculate a range of symbols within a sub-frame that can be received by the relay station apparatus, on the basis of difference of frame timing of the sub-frame between the base station apparatus and the relay station apparatus and on the basis of a propagation delay time between the base station apparatus and the relay station apparatus, and map a data signal for the relay station apparatus in any one of the symbols in the range of symbols that can be received by the relay station apparatus.

2. The base station apparatus according to claim 1, wherein the mapping section is adapted to map a data signal for the relay station apparatus from a head in a forward direction from a symbol immediately after a symbol in which the control signal is mapped, and map the data signal for the relay station apparatus from an end in a backward direction from a symbol immediately before a symbol in which the control signal is mapped.

3. The base station apparatus according to claim 1, wherein the transmission section is adapted to transmit the control signal for the relay station apparatus such that the control signal includes information about the number of symbols in which the control signal for the mobile station apparatus is mapped.

4. A transmission method for transmitting a control signal from a base station apparatus to a relay station apparatus in a radio communication system in which a time resource used for downlink from the base station apparatus to the relay station apparatus and a time resource used for downlink from the relay station apparatus to a mobile station apparatus covered by the relay station apparatus are time-divided within a predetermined period, the transmission method comprising:
mapping by a mapping section a physical downlink control channel for the mobile station apparatus to first one or more symbols from the beginning of the predetermined period and mapping a control signal for the relay station apparatus to a symbol in the predetermined period; and transmitting the mapped physical downlink control channel and the mapped control signal for the relay station apparatus,
wherein the symbol, to which the control signal for the relay station apparatus is mapped, is a (D+1)-th symbol in the predetermined period, wherein D denotes a maximum number of symbols, to which the physical downlink control channel for the mobile station apparatus is mapped; and
wherein:
the radio communication system supports a long term evolution system, the predetermined period is a sub-frame length, calculating by the mapping section a range of symbols within a sub-frame that can be received by the relay station apparatus, on the basis of difference of frame timing of the sub-frame between the base station apparatus and the relay station apparatus and on the basis of a propagation delay time between the base station apparatus and the relay station apparatus, and mapping by the mapping section a data signal for the relay station apparatus in any one of the symbols in the range of symbols that can be received by the relay station apparatus.

## Patentansprüche

1. Basisstationsvorrichtung (100) zur Verwendung in einem Funkkommunikationssystem, in dem eine zum Downlink von der Basisstationsvorrichtung zu einer Relaisstationsvorrichtung (200) verwendete Zeitressource und eine zum Downlink von der Relaisstationsvorrichtung zu einer von der Relaisstationsvorrichtung abgedeckten Mobilstationsvorrichtung verwendete Zeitressource in einem vorbestimmten Zeitraum zeitgeteilt sind, wobei die Basisstationsvorrichtung umfasst:
einen zum Zuordnen eines physischen Downlink-Steuerkanals für die Mobilstationsvorrichtung zu ersten einen oder mehreren Symbolen vom Beginn des vorbestimmten Zeitraums und zum Zuordnen eines Steuersignals für die Relaisstationsvorrichtung zu einem Symbol im vorbestimmten Zeitraum angepassten Zuordnungsabschnitt (108); und
einen zum Senden des zugeordneten physischen Downlink-Steuerkanals und des zugeordneten Steuersignals für die Relaisstationsvorrichtung angepassten Sendeabschnitt (109),
wobei das Symbol, für das der Zuordnungsabschnitt zum Zuordnen des Steuersignals für die Relaisstationsvorrichtung angepasst ist, ein (D+1)-tes Symbol im vorbestimmten Zeitraum ist, wobei D eine maximale Zahl von Symbolen bezeichnet, zu denen der physische Downlink-Steuerkanal für die Mobilstationsvorrichtung zugeordnet ist; und
wobei:
das Funkkommunikationssystem ein Long-Term-Evolution-System unterstützt, der vorbestimmte Zeitraum eine Subframe-Länge ist und der Zuordnungsabschnitt zum Berechnen einer Reihe von Symbolen in einem Subframe, die von der Relaisstationsvorrichtung empfangen werden können, auf der Basis des Unterschieds des Framezeitpunkts des Subframes zwischen der Basisstationsvorrichtung und der Relaisstationsvorrichtung und auf der Basis einer Ausbreitungsverzögerung zwischen der Basisstationsvorrichtung und der Relaisstationsvorrichtung und Zuordnen eines Datensignals für die Relaisstationsvorrichtung in einem der Symbole in der Reihe von Symbolen, die von der Relaisstationsvorrichtungen empfangen werden können, angepasst ist.

2. Basisstationsvorrichtung nach Anspruch 1, wobei der Zuordnungsabschnitt zum Zuordnen eines Datensignals für die Relaisstationsvorrichtung von einem Kopf in einer Vorwärtsrichtung von einem Symbol unmittelbar nach einem Symbol, in dem das Steuersignal zugeordnet ist, und Zuordnen des Datensignals für die Relaisstationsvorrichtung von einem Ende in einer Rückwärtsrichtung von einem Symbol unmittelbar vor einem Symbol, in dem das Steuersignal zugeordnet ist, angepasst ist.

3. Basisstationsvorrichtung nach Anspruch 1, wobei der Sendeabschnitt zum Senden des Steuersignals für die Relaisstationsvorrichtung angepasst ist, so dass das Steuersignal eine Information zur Zahl von Symbolen umfasst, in denen das Steuersignal für die Mobilstationsvorrichtung zugeordnet ist.

4. Sendeverfahren zum Senden eines Steuersignals von einer Basisstationsvorrichtung an eine Relaisstationsvorrichtung in einem Funkkommunikationssystem, in dem eine zum Downlink von der Basisstationsvorrichtung zur Relaisstationsvorrichtung verwendete Zeitressource und eine zum Downlink von der Relaisstationsvorrichtung zu einer von der Relaisstationsvorrichtung abgedeckten Mobilstationsvorrichtung verwendete Zeitressource in einem vorbestimmten Zeitraum zeitgeteilt sind, wobei das Sendeverfahren umfasst:
Zuordnen eines physischen Downlink-Steuerkanals für die Mobilstationsvorrichtung durch einen Zuordnungsabschnitt zu ersten einen oder mehreren Symbolen vom Beginn des vorbestimmten Zeitraums und Zuordnen eines Steuersignals für die Relaisstationsvorrichtung zu einem Symbol im vorbestimmten Zeitraum;
und
Senden des zugeordneten physischen Downlink-Steuerkanals und des zugeordneten Steuersignals für die Relaisstationsvorrichtung,
wobei das Symbol, zu dem das Steuersignal für die Relaisstationsvorrichtung zugeordnet ist, ein (D+1)-tes Symbol im vorbestimmten Zeitraum ist, wobei D eine maximale Zahl von Symbolen bezeichnet, zu denen der physische Downlink-Steuerkanal für die Mobilstationsvorrichtung zugeordnet ist; und
wobei:
das Funkkommunikationssystem ein Long-Term-Evolution-System unterstützt, der vorbestimmte Zeitraum eine Subframe-Länge ist, und ein Berechnen durch den Zuordnungsabschnitt einer Reihe von Symbolen in einem Subframe, die von der Relaisstationsvorrichtung empfangen werden können, auf der Basis des Unterschieds des Framezeitpunkts des Subframes zwischen der Basisstationsvorrichtung und der Relaisstationsvorrichtung und auf der Basis einer Ausbreitungsverzögerung zwischen der Basisstationsvorrichtung und der Relaisstationsvorrichtung und ein Zuordnen eines Datensignals für die Relaisstationsvorrichtung in einem der Symbole in der Reihe von Symbolen, die von der Relaisstationsvorrichtungen empfangen werden können, erfolgen.

## Revendications

1. Appareil de station de base (100) à utiliser dans un système de radiocommunication dans lequel une ressource de temps utilisée pour une liaison descendante à partir de l'appareil de station de base vers un appareil de station relais (200) et une ressource de temps utilisée pour une liaison descendante à partir de l'appareil de station relais vers un appareil de station mobile couvert par l'appareil de station relais sont divisées dans le temps au sein d'une période prédéterminée, l'appareil de station de base comprenant :
une section de mappage (108) adaptée pour mapper un canal de commande de liaison descendante physique pour l'appareil de station mobile sur un premier ou plusieurs symboles à partir du début de la période prédéterminée et pour mapper un signal de commande pour l'appareil de station relais sur un symbole dans la période prédéterminée ; et
une section de transmission (109) adaptée pour transmettre le canal de commande de liaison descendante physique mappé et le signal de commande mappé pour l'appareil de station relais,
dans lequel le symbole, sur lequel la section de mappage est adaptée pour mapper le signal de commande pour l'appareil de station relais, est un (D+1)^{ème} symbole dans la période prédéterminée, où D désigne un nombre maximum de symboles, sur lequel le canal de commande de liaison descendante physique pour l'appareil de station mobile est mappé ; et
dans lequel :
le système de radiocommunication prend en charge un système d'évolution à long terme, la période prédéterminée est une longueur de sous-trame, la section de mappage est adaptée pour calculer une plage de symboles dans une sous-trame qui peuvent être reçus par l'appareil de station relais, sur la base d'une différence de cadencement de trame de la sous-trame entre l'appareil de station de base et l'appareil de station relais et sur la base d'un temps de retard de propagation entre l'appareil de station de base et l'appareil de station relais, et mapper un signal de données pour l'appareil de station relais dans l'un quelconque des symboles dans la plage de symboles qui peuvent être reçus par l'appareil de station relais.

2. Appareil de station de base selon la revendication 1, dans lequel la section de mappage est adaptée pour mapper un signal de données pour l'appareil de station de relais à partir d'un en-tête dans une direction vers l'avant à partir d'un symbole situé immédiatement après un symbole dans lequel le signal de commande est mappé, et mapper le signal de données pour l'appareil de station relais à partir d'une extrémité dans une direction vers l'arrière à partir d'un symbole situé immédiatement avant un symbole dans lequel le signal de commande est mappé.

3. Appareil de station de base selon la revendication 1, dans lequel la section de transmission est adaptée pour transmettre le signal de commande pour l'appareil de station relais de telle sorte que le signal de commande comprend des informations concernant le nombre de symboles dans lesquels le signal de commande pour l'appareil de station mobile est mappé.

4. Procédé de transmission pour transmettre un signal de commande à partir d'un appareil de station de base à un appareil de station relais dans un système de radiocommunication dans lequel une ressource de temps utilisée pour une liaison descendante à partir de l'appareil de station de base vers l'appareil de station relais et une ressource de temps utilisée pour une liaison descendante à partir de l'appareil de station relais vers un appareil de station mobile couvert par l'appareil de station relais sont divisées dans le temps au sein d'une période prédéterminée, le procédé de transmission comprenant les étapes consistant à :
mapper par une section de mappage un canal de commande de liaison descendante physique pour l'appareil de station mobile sur un premier ou plusieurs symboles à partir du début de la période prédéterminée et pour mapper un signal de commande pour l'appareil de station relais sur un symbole dans la période prédéterminée ; et
transmettre le canal de commande de liaison descendante physique mappé et le signal de commande mappé pour l'appareil de station relais,
dans lequel le symbole, sur lequel est mappé le signal de commande pour l'appareil de station relais, est un (D+1)^{ème} symbole dans la période prédéterminée, où D désigne un nombre maximum de symboles, sur lequel le canal de commande de liaison descendante physique pour l'appareil de station mobile est mappé ; et
dans lequel :
le système de radiocommunication prend en charge un système d'évolution à long terme, la période prédéterminée est une longueur de sous-trame, calculer par la section de mappage une plage de symboles dans une sous-trame qui peuvent être reçus par l'appareil de station relais, sur la base d'une différence de cadencement de trame de la sous-trame entre l'appareil de station de base et l'appareil de station relais et sur la base d'un temps de retard de propagation entre l'appareil de station de base et l'appareil de station relais, et mapper par la section de mappage un signal de données pour l'appareil de station relais dans l'un quelconque des symboles dans la plage de symboles qui peuvent être reçus par l'appareil de station relais.
